# FASCICULE DE BREVET EUROPEEN

(11) **EP 2 321 869 B1**
(45) Date de publication et mention de la délivrance du brevet: **05.09.2012**
(21) Numéro de dépôt: 09784248.8
(22) Date de dépôt: 02.07.2009
(51) Int. Cl.: H01F 1/01, F25B 30/00, H01M 10/50, B60K 11/02

(54) **PROCÈDE ET DISPOSITIF DE RÉGULATION THERMIQUE D'UNE BATTERIE RECHARGEABLE DE STOCKAGE D'ÉNERGIE ÉLECTRIQUE**
VERFAHREN UND EINRICHTUNG ZUR BEREITSTELLUNG DER TEMPERATURREGELUNG EINER WIEDERAUFLADBAREN SPEICHERBATTERIE FÜR ELEKTRISCHE ENERGIE
METHOD AND DEVICE PROVIDING THE TEMPERATURE REGULATION OF A RECHARGEABLE ELECTRICAL ENERGY STORAGE BATTERY

(30) Priorité: 07.07.2008 FR 0803857
(43) Date de publication de la demande: 18.05.2011
(73) Titulaire: Dow Kokam France SAS, 91300 Massy (FR)
(72) Inventeur: MULLER, Christian, F-67000 Strasbourg (FR); HEITZLIER, Jean-Claude, F-68180 Horbourg-Wihr (FR); DOUARRE, Alain-François, F-91190 Gif Sur Yvette (FR)
(74) Mandataire: Sayettat, Julien Christian
(86) Numéro de dépôt international: PCT/FR2009/000825
(87) Numéro de publication internationale: WO 2010/004131

(56) Documents cités:
- FR-A- 2 865 070
- FR-A- 2 890 158
- JP-A- 2002 106 999
- JP-A- 2005 055 060
- US-A1- 2005 047 284

## Description

### Domaine technique

La présente invention concerne un procédé de régulation thermique autonome et permanent d'au moins une batterie de stockage d'énergie électrique rechargeable, notamment d'une batterie d'un véhicule à traction électrique ou hybride, comprenant au moins un composant électrochimique.

La présente invention concerne également un dispositif de régulation thermique autonome et permanent d'au moins une batterie de stockage d'énergie électrique rechargeable, notamment d'une batterie d'un véhicule à traction électrique ou hybride, comprenant au moins un composant électrochimique.

### Technique antérieure

Les batteries électriques rechargeables constituent le principal organe critique des véhicules à traction électriques ou hybrides. Les batteries électrochimiques de dernière génération, notamment au lithium, ont atteint un niveau de performances suffisant pour le déploiement commercial. Toutefois, un contrôle thermique interne rigoureux des batteries est déterminant pour garantir la pérennité de cet organe coûteux et relativement fragile. En outre, les réalisations actuelles n'offrent pas encore la stabilité de prestations (fonctionnement normal garanti quelle que soit la température ambiante), voire la disponibilité de la batterie dans certaines conditions d'usage, auxquelles les véhicules à carburant fossile ont habitué les utilisateurs, à savoir une autonomie kilométrique qui n'est pas liée à la température.

En effet, les variations thermiques subies par l'électrochimie de ces nouvelles batteries à forte densité d'énergie ou de puissance, impactent fortement, selon leurs conditions d'environnement et d'usage, en cumulatif leur santé et leur longévité, et en instantané, leurs performances. Il est ainsi généralement admis que ces batteries requièrent un système de régulation thermique actif, dès lors qu'elles atteignent une certaine taille critique ou qu'elles sont placées dans un environnement thermique contraignant.

Les solutions actuelles sont principalement apportées par des dispositifs classiques de régulation thermique, à air ou à fluide caloporteur, mais qui ont l'inconvénient d'être gros consommateurs d'énergie, encombrants et peu efficaces. Un autre inconvénient qui découle du précédent est qu'on ne peut faire appel à ces moyens de régulation que de façon limitée dès lors qu'ils doivent prélever leur énergie dans la batterie elle-même. C'est le cas quand la batterie est en autonomie, c'est-à-dire quand elle n'est pas en train d'être rechargée.

Pour les véhicules électriques ou hybrides notamment, le système de régulation thermique n'est classiquement activé que quand le véhicule roule ou est en charge. Sur route, le dispositif de régulation thermique se limite généralement à tirer partie de ressources thermiques gratuitement disponibles lorsque son bilan de température est favorable (par exemple échange direct avec l'air ambiant). De ce fait, les performances de la batterie ne sont pas optimisées et varient notamment avec la saison. En outre, le dispositif de régulation étant désactivé à l'arrêt, après un stationnement prolongé dans des conditions adverses, les prestations de la batterie peuvent être dégradées jusqu'à l'indisponibilité totale du véhicule.

Ces défauts sont mal acceptés par les utilisateurs qui ont été habitués à des performances de haut niveau et à une fiabilité remarquable, même sur des véhicules bas de gamme, ainsi qu'à une sécurité d'utilisation sans faille.

Il existe par ailleurs des dispositifs de refroidissement des moteurs thermiques de véhicules qui utilisent dans leur circuit de refroidissement une pompe à chaleur à matériau magnétocalorique qui récupère l'énergie thermique produite par le moteur et la réinjecte dans l'habitacle du véhicule - voir notamment les publications US2005/0047284 et JP2005/055060. Toutefois, ces dispositifs de refroidissement sont dépendants du fonctionnement du moteur et ne peuvent être activés indépendamment. De fait, ils ne sont pas transférables au refroidissement d'une batterie en tant que telle.

Il apparaît cependant indispensable que des solutions soient apportées pour améliorer cette situation et combler les défauts des dispositifs de régulation thermique existants.

### Exposé de l'invention

Le but de la présente invention consiste à pallier les inconvénients mentionnés ci-dessus en offrant une régulation thermique à haute efficacité énergétique, faiblement consommatrice d'énergie électrique, respectueuse de l'environnement et apte à assurer un contrôle thermique précis, autonome et permanent de la batterie, en mobilisant très peu de son énergie électrique stockée pour alimenter la régulation thermique afin de maximiser la capacité de la batterie disponible pour les fonctions utiles du système alimenté, notamment la motricité et l'autonomie des véhicules électriques.

Ce but est atteint par le procédé selon l'invention tel que défini en préambule, caractérisé en ce que l'on utilise au moins une enceinte dans laquelle est logé ledit composant électrochimique de ladite batterie, au moins une pompe à chaleur magnétocalorique associée à ladite enceinte et alimentée uniquement par la batterie, et au moins un organe échangeur de chaleur ouvert sur le milieu extérieur et en ce que l'on échange des calories entre ledit composant électrochimique de ladite batterie et ledit milieu extérieur au moyen d'un circuit de circulation d'un fluide caloporteur couplé entre ladite batterie, ledit échangeur de chaleur et ladite pompe à chaleur.

Le procédé selon l'invention pallie les inconvénients précédemment exposés en ce que la puissance thermique restituée, utilisée pour assurer la régulation thermique de ladite batterie, puise peu sur ses ressources internes, grâce à l'exceptionnelle efficacité énergétique (coefficient de performance compris entre 4 et 10) de la pompe à chaleur magnétocalorique qui est basée sur une propriété quantique de la matière : une orientation variable des spins des électrons externes des atomes constituant le ou les alliages magnétocaloriques et non pas sur un changement de phase d'un gaz réfrigérant réalisé par une action mécanique de compression et détente fortement consommatrice d'énergie. Ainsi on peut faire intervenir le dispositif de régulation thermique régulièrement, y compris quand le véhicule est en autonomie sur sa batterie, de telle sorte que la batterie fonctionne en permanence dans des conditions favorables.

Selon un mode de réalisation avantageux, l'on utilise plusieurs pompes à chaleur magnétocaloriques, chacune de ces pompes étant opérationnelle dans une plage de température déterminée, et l'on connecte au moins l'une desdites pompes avec ladite batterie et ledit organe échangeur de chaleur ouvert sur le milieu extérieur en fonction de la plage de température intérieure et/ou extérieure du composant électrochimique de ladite batterie.

L'avantage de cette disposition provient de ce qu'en toutes circonstances, la régulation thermique de la batterie est prise en charge par une ou plusieurs pompes à chaleur magnétocaloriques optimisées pour la plage de températures actuelle. Cette manière de procéder permet de bénéficier d'une efficacité énergétique très supérieure à celle d'une pompe à chaleur unique, qui devrait être dimensionnée pour une grande étendue du domaine de températures, alors qu'elle ne fonctionne jamais au voisinage des températures extrême de ce domaine de températures.

Avantageusement, dans une réalisation adaptée à la régulation thermique d'une batterie ou d'un groupe de batteries exposés à des variations de températures de grande amplitude entre l'été et l'hiver, l'on utilise deux pompes magnétocaloriques, chacune étant agencée pour fonctionner dans un gradient de température de l'ordre de 50 K : l'une desdites pompes entre une température minimale de l'échangeur ouvert sur le milieu extérieur de l'ordre de -35°C et une température intérieure de l'ordre de +20°C, et l'autre desdites pompes entre une température maximale dudit échangeur de l'ordre de +70°C et une température intérieure de l'ordre de +20°C.

Avantageusement, lesdites plusieurs pompes à chaleur mutualisent des fonctions communes de sorte à constituer un appareil unique. En effet, la seule partie les différenciant étant le régénérateur actif mettant en oeuvre les matériaux magnétocaloriques adaptés auxdites plages de températures, les autres fonctions telles que le carter, le système de commutation magnétique, le système de commutation hydraulique, et les systèmes d'entraînement et de pompage peuvent être communalisées dans une conception mécanique adaptée, moyennant un dispositif de commutation hydraulique ou mécanique desdits régénérateurs, de sorte que le fluide caloporteur ne circule que dans le ou les régénérateurs adaptés aux conditions opératoires du moment.

Ce but est également atteint par le dispositif selon l'invention, caractérisé en ce qu'il comporte au moins une enceinte dans laquelle est logé ledit composant électrochimique de ladite batterie, au moins une pompe à chaleur magnétocalorique associée à ladite enceinte et alimentée uniquement par la batterie au moins un circuit de circulation d'un fluide caloporteur couplé entre ladite batterie et ladite pompe à chaleur et au moins un organe échangeur de chaleur ouvert sur le milieu extérieur et connecté audit circuit de circulation du fluide caloporteur pour échanger des calories avec ledit milieu extérieur.

Selon une forme de réalisation préférée, le dispositif comporte plusieurs pompes à chaleur magnétocaloriques, chacune de ces pompes étant opérationnelle dans une plage de température déterminée, l'une au moins desdites pompes étant connectée avec ladite batterie et ledit organe échangeur de chaleur ouvert sur le milieu extérieur en fonction de la plage de température intérieure et/ou extérieure du composant électrochimique de ladite batterie.

Dans un cas spécifique adapté à la régulation thermique d'une batterie ou d'un groupe de batteries exposés à des variations climatiques de grande amplitude entre l'été et l'hiver, le dispositif comporte avantageusement deux pompes magnétocaloriques, agencées pour fonctionner typiquement dans un gradient de température de l'ordre de 50 K, entre une température minimale de l'échangeur ouvert sur le milieu extérieur de l'ordre de -30°C et une température intérieure de l'ordre de +20°C pour l'une desdites pompes, et entre une température maximale dudit échangeur de l'ordre de +70°C et une température intérieure de l'ordre de +20°C pour l'autre desdites pompes. Le nombre de pompes à chaleur magnétocaloriques et le gradient de températures seront ajustables lors de la conception en fonction des conditions climatiques auxquelles les batteries d'éléments électrochimiques seront exposées.

D'une manière préférentielle, lesdites deux ou plusieurs pompes sont en fait combinées en un appareil unique disposant de deux ou plusieurs régénérateurs magnétocaloriques, chacun dédié à une plage de température spécifique, ainsi que d'un dispositif de commutation hydraulique ou mécanique desdits régénérateurs, de sorte que le fluide caloporteur ne circule que dans le ou les régénérateurs adaptés aux conditions opératoires du moment.

### Description sommaire des dessins :

La présente invention et ses avantages apparaîtront mieux dans la description suivante décrivant un mode de réalisation, donné à titre d'exemple non limitatif en référence au dessin annexé, dans lequel :

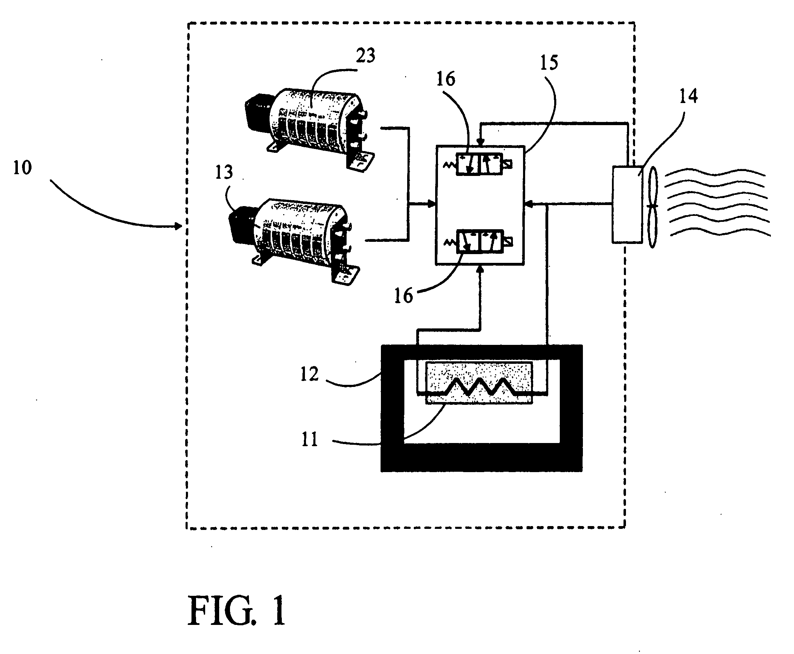

la figure 1 est une vue schématique d'une forme de réalisation avantageuse du dispositif de l'invention.

Le procédé de l'invention fait appel à la technologie de la pompe à chaleur magnétocalorique dont les principaux avantages sont sa grande efficacité énergétique, sa faible consommation électrique, un fonctionnement favorable du point de vue de l'environnement et de la protection de l'atmosphère, et l'absence de gaz.

Le procédé consiste à effectuer une régulation thermique, appelée un thermostatage, intégrée de la batterie, à haute efficacité énergétique et faible consommation, respectueuse de l'environnement, en vue d'assurer un contrôle thermique précis, autonome et en continu ou permanent de ladite batterie ou du groupe de batteries, que la batterie ou le groupe de batteries soit actif ou passif. Le procédé a la double fonction d'équilibrer les échanges thermiques avec le milieu extérieur à très faible coût énergétique, et de dissiper les apports thermiques internes de la batterie en usage, à l'utilisation du véhicule et lors de la recharge de la batterie. On effectue de préférence cet équilibrage des échanges thermiques et cette évacuation des apports caloriques internes excédentaires de façon étalée sur un cycle de 24h en mettant à profit l'inertie thermique de la batterie.

Le procédé ne s'applique pas uniquement aux batteries ou groupes de batteries destinées à la traction de véhicules électriques ou hybrides, mais également à toute batterie mobile ou stationnaire d'une certaine taille et densité de puissance ou d'énergie, dont les conditions d'utilisation justifient un contrôle thermique actif, permanent et performant. Une de ces conditions est que la batterie n'ait pas la possibilité d'échanger thermiquement, dans les phases où elle en a besoin, avec des sources thermiques externes dont les températures sont compatibles avec un transfert thermique direct.

En d'autres termes, le procédé selon la présente invention permet de réaliser un thermostatage d'au moins une batterie ce, quel que soit l'environnement dans lequel est intégré la batterie. Ce contrôle de la température de la batterie est réalisé de manière permanente et autonome. Il en résulte que lorsque ladite batterie est une batterie de véhicule, par exemple, ce contrôle est réalisé même lorsque le moteur du véhicule est à l'arrêt ce, afin de rallonger la durée de vie et d'optimiser les performances de la batterie.

De même, le thermostatage d'une batterie par l'intermédiaire du procédé selon l'invention sera aussi bien réalisé lorsque cette batterie est en charge que lors de son stockage, par exemple. Ce procédé permet ainsi de réaliser un packc-batterie(s) comportant une régulation intégrée, continue et autonome de la ou des batterie(s).

Bien entendu, le procédé selon l'invention n'est pas limité à la régulation de la température d'une batterie de véhicule. Il peut être utilisé pour tout type de batterie(s) (domestiques ou industrielles, par exemple) dont notamment les performances et la longévité peuvent être accrues par l'intermédiaire de la mise en oeuvre dudit procédé permettant de contrôler la température constamment et de manière avantageuse en termes de consommation d'énergie.

Le refroidissement actif à régénération par effet magnétocalorique utilisé dans la pompe à chaleur magnétocalorique est basé sur la capacité de composants appelés « matériaux magnétocaloriques » à s'échauffer et à se refroidir quand ils sont plongés ou retirés d'un champ magnétique, et d'une manière générale, quand ils subissent une variation de champ magnétique. Cet effet est connu en soi, mais il est principalement utilisé pour générer du froid dans des installations de climatisation ou des installations frigorifiques, parce qu'il permet d'obtenir d'une manière non polluante un résultat que l'on obtient couramment avec des appareils de réfrigération à compresseurs utilisant des gaz polluants à effet de serre.

En ce qui concerne les pompes à chaleur magnétocaloriques et contrairement aux machines frigorifiques et aux pompes à chaleur classiques, qui utilisent des gaz réfrigérants ayant un effet de serre notable ou qui sont nocifs pour la couche d'ozone (CFC, HFC), elles utilisent des liquides caloporteurs inoffensifs pour l'environnement, en particulier de la saumure ou de l'eau avec adjonction de glycol. Les problèmes liés aux fluides ne se posent alors plus. En effet, les fonctions de transport de calories et de variation de température sont dissociées, contrairement aux machines classiques où elles sont assurées par le fluide frigorigène.

L'exploitation des phénomènes magnétocaloriques reposé sur l'interaction simultanée de champs magnétiques et de transferts thermiques au sein d'un volume de matériau magnétocalorique. La cohabitation de ces phénomènes contigus se heurte à des besoins contradictoires en termes d'écoulement fluidique, de perméabilité magnétique, de conductivité thermique, de résistance à la corrosion, de frottement visqueux et de pression électromagnétique.

Les avancées scientifiques récentes sur ces appareils portent sur des échanges thermiques à fort coefficient d'échange (h > 40000W/M²K) pour des fréquences élevées (50 à 100 Hz) entre un solide qui est le matériau magnétocalorique et un liquide caloporteur qui est par exemple une saumure ou de l'eau avec des additifs pour pouvoir atteindre les objectifs de faible consommation d'énergie et une intégration mécanique poussée dans un groupe de batteries.

En ce qui concerne les batteries, de nombreux résultats théoriques et expérimentaux sur les batteries à haute densité d'énergie et de puissance, dont les plus en pointe sont actuellement les électrochimies de type Lithium-polymère, font la relation entre les conditions thermiques des composants électrochimiques des batteries et leurs performances en charge et en décharge, ainsi que leur vieillissement. On a constaté que la température est en lien exponentiel avec le vieillissement calendaire des composants électrochimiques des batteries, qui se traduit par une augmentation de sa résistance interne, et par une diminution de sa capacité et de sa puissance déchargeable. C'est la durée d'exposition cumulée à des températures irrégulières et élevées, notamment à l'état chargé, qui contribue au vieillissement, que la batterie soit active ou passive. En charge et en décharge, les pertes thermiques internes contribuent à l'échauffement de la batterie, de façon d'autant plus forte que la puissance de charge ou de décharge est élevée. A partir d'une certaine température interne de masse de la batterie, il y a risque d'échauffement local à l'intérieur des composants électrochimiques des batteries sur de forts appels de puissance, pouvant conduire à un emballement thermique. Différentes réactions chimiques de plus en plus exothermiques sont susceptibles d'intervenir successivement à mesure que la température croît, jusqu'à la destruction de la batterie si rien n'est prévu pour prévenir le phénomène. En pratique, quand la température interne de la batterie atteint un niveau potentiellement risqué, le système de contrôle de la batterie limite la puissance restituable, jusqu'à l'immobilisation du véhicule si la température continue à croître. La capacité déchargeable est notablement dépendante de la température interne de la batterie, de sorte que l'autonomie du véhicule peut varier de façon marquée entre l'hiver et l'été si on laisse la batterie s'équilibrer thermiquement avec le milieu extérieur.

A basse température, les puissances maximale et continue de recharge autorisées diminuent fortement, jusqu'à l'incapacité de recharge au-dessous d'un seuil de température qui dépend des électrochimies, mais sont souvent au-dessus des minimas de températures hivernales de l'Europe continentale et du Nord.

A basse température, l'énergie déchargeable et la puissance restituable diminuent également de façon marquée, et donc les performances du véhicule et son autonomie, et peuvent aller jusqu'à l'incapacité de démarrer à des températures très basses, également variables en fonction des électrochimies.

Les bénéfices attendus par le procédé selon l'invention sont :
- des gains substantiels de longévité de la batterie,
- une disponibilité équivalente à celle des véhicules actuels à moteurs thermiques au niveau de prestations nominal, en toutes conditions de vie et de stockage du véhicule, tant que la batterie n'est pas déchargée,
- une exploitation optimisée de la batterie garantissant la stabilité des performances, maximisant l'énergie déchargeable et fiabilisant l'indication d'autonomie restante,
- des gains significatifs de consommation électrique à la prise.

Le dispositif 10 de régulation thermique ou de thermostatage, selon l'invention, intégré, à haute efficacité énergétique et faible consommation utilisant la technologie du refroidissement magnétique sans aucun gaz réfrigérant, constitue une alternative techniquement et économiquement viable par rapport aux systèmes de ventilation ou de compression à gaz réfrigérant utilisés pour les applications de thermostatage de pack-batteries rechargeables des véhicules hybrides et des véhicules électriques pour des températures non limitatives de fonctionnement s'étendant de -30°C à +60°C.

Le dispositif 10 de régulation thermique fonctionne de manière autonome et permanente. La ou les batteries de stockage sont régulées en température de manière permanente, ce qui permet d'augmenter leur durée de vie et leurs performances. Dans le cas de batteries de véhicules, cette régulation est permanente et s'effectue même après l'arrêt du moteur, l'énergie motrice de ce dernier n'étant pas utilisée. Le dispositif 10 de régulation thermique peut être considéré comme un pack-batterie(s) comportant une régulation intégrée de ladite (desdites) batterie(s).

Bien entendu, le dispositif de régulation selon l'invention n'est pas limité à la régulation de la température d'une batterie de véhicule. Il peut comprendre tout type de batterie(s) dont l'on souhaite accroître les performances et la longévité en mettant en oeuvre le procédé selon l'invention.

Le dispositif 10 de la figure 1 comporte un groupe de batteries rechargeables 11 logées dans un réceptacle 12, au moins une pompe à chaleur magnétocalorique 13, mais dans l'exemple représenté deux pompes à chaleur magnétocaloriques 13 et 23, un échangeur de chaleur 14 et un circuit 15 de circulation d'un fluide caloporteur reliant ces différents composants. Une ou plusieurs valves de séparation 16 sont montées sur le circuit 15 de circulation d'un fluide caloporteur pour mettre en fonction la pompe à chaleur magnétocalorique 13 ou la pompe à chaleur magnétocalorique 23 selon les informations données par un capteur thermique placé à l'intérieur du pack-batteries. La pompe à chaleur magnétocalorique 13, 23 est alimentée uniquement par ledit pack-batteries dans lequel elle est intégrée.

Dans la pratique, chacune des pompes à chaleur magnétocalorique 13, 23 est adaptée à une plage de température dans laquelle les matériaux magnétocaloriques utilisés sont opérationnels. C'est ainsi que l'une des pompes, par exemple la pompe 13, est agencée pour fonctionner dans un gradient de température de l'ordre de 50 K, par exemple entre une température d'échangeur minimale de l'ordre de -30°C et une température intérieure de l'ordre de +20°C, correspondant à des conditions hivernales de pays froids. L'autre pompe, par exemple la pompe 23, est agencée pour fonctionner entre une température d'échangeur maximale de l'ordre de +70°C et une température intérieure de l'ordre de +20°C, correspondant à des conditions estivales de pays chauds.

En termes d'utilisation, le dispositif 10 de l'invention est conçu pour repousser considérablement les compromis tolérés sur la première génération de véhicules, touchant à la disponibilité et à la stabilité des performances. Il est de nature à diminuer considérablement les aléas de vieillissement prématuré de la batterie et permet en outre de disposer en permanence des performances et de l'autonomie optimales du véhicule. Ce dispositif 10 prélève en outre moins d'énergie à la batterie, et libère de l'autonomie, tout, en consommant moins d'énergie électrique à la prise au moment de la recharge des batteries.

## Revendications

1. Procédé de régulation thermique d'au moins une batterie de stockage d'énergie électrique rechargeable, notamment d'une batterie d'un véhicule à traction électrique, comprenant au moins un composant électrochimique, dans lequel on utilise au moins une enceinte (12) dans laquelle est logé ledit composant électrochimique de ladite batterie (11), au moins une pompe à chaleur magnétocalorique (13, 23) associée à ladite enceinte, et au moins un organe échangeur de chaleur (14) ouvert sur le milieu extérieur et dans lequel on échange des calories entre ledit composant électrochimique de ladite batterie (11) et ledit milieu extérieur au moyen d'un circuit (15) de circulation d'un fluide caloporteur couplé entre ladite batterie (11), ladite pompe à chaleur (13, 23) et ledit échangeur de chaleur (14), ledit procédé étant **caractérisé en ce que** la pompe à chaleur (13,23) est alimentée uniquement par la batterie dans laquelle elle est intégrée afin que ledit procédé soit autonome et permanent.

2. Procédé selon la revendication 1, **caractérisé en ce que** l'on utilise plusieurs pompes à chaleur magnétocaloriques (13, 23), chacune de ces pompes étant opérationnelle dans une plage de température déterminée, et **en ce que** l'on connecte au moins l'une desdites pompes avec ladite batterie et ledit organe échangeur de chaleur ouvert sur le milieu extérieur en fonction de la plage de température intérieure et/ou extérieure du composant électrochimique de ladite batterie.

3. Procédé selon la revendication 2, adapté à la régulation thermique d'une batterie ou d'un groupe de batteries exposés à des variations climatiques de grande amplitude entre l'hiver et l'été, caractérisé en ce l'on utilise deux pompes à chaleur magnétocaloriques (13, 23) agencées pour fonctionner sensiblement dans un gradient de température de l'ordre de 50 K, entre une température minimale de l'échangeur ouvert sur le milieu extérieur de l'ordre de -30°C et une température intérieure de l'ordre de +20°C pour l'une desdites pompes, et entre une température maximale dudit échangeur de l'ordre de +70°C et une température intérieure de l'ordre de +20°C pour l'autre desdites pompes.

4. Procédé selon la revendication 2 ou 3, **caractérisé en ce que** lesdites pompes à chaleur magnétocaloriques (13, 23) sont intégrées dans un seul dispositif (10) mutualisant au moins certaines de leurs fonctions indifférenciées et qu'il met en oeuvre au moins deux régénérateurs magnétocaloriques, chacun adapté à une plage de température spécifique, ainsi qu'un dispositif de commutation (16) hydraulique ou mécanique desdits régénérateurs, de sorte que le fluide caloporteur ne circule que dans le ou les régénérateurs adaptés aux conditions opératoires du moment.

5. Dispositif (10) de régulation thermique d'au moins une batterie de stockage d'énergie électrique rechargeable, notamment d'une batterie d'un véhicule à traction électrique ou hybride, comprenant au moins un composant électrochimique, pour la mise en oeuvre du procédé de la revendication 1, comportant au moins une enceinte (12) dans laquelle est logé ledit composant électrochimique de ladite batterie (11), au moins une pompe à chaleur magnétocalorique (13, 23) associée à ladite enceinte, au moins un circuit (15) de circulation d'un fluide caloporteur couplé entre ladite batterie et ladite pompe à chaleur et au moins un organe échangeur de chaleur (14) ouvert sur le milieu extérieur et connecté audit circuit de circulation de fluide caloporteur pour échanger des calories avec ledit milieu extérieur, ledit dispositif étant **caractérisé en ce que** la pompe à chaleur (13,23) est alimentée uniquement par la batterie dans laquelle elle est intégrée.

6. Dispositif selon la revendication 5, **caractérisé en ce qu'**il comporte plusieurs pompes à chaleur magnétocaloriques (13, 23), chacune de ces pompes étant opérationnelle dans une plage de température déterminée, et **en ce que** l'on connecte au moins l'une desdites pompes avec ladite batterie et ledit organe échangeur de chaleur ouvert sur le milieu extérieur en fonction de la plage de température intérieure et/ou extérieure du composant électrochimique de ladite batterie.

7. Dispositif selon la revendication 6, adapté à la régulation thermique d'une batterie ou d'un groupe de batteries exposés à des variations climatiques de grande amplitude entre l'hiver et l'été, **caractérisé en ce qu'**il comporte deux pompes à chaleur magnétocaloriques (13, 23) agencées pour fonctionner sensiblement dans un gradient de température de l'ordre de 50 K, entre une température minimale de l'échangeur ouvert sur le milieu extérieur de l'ordre de -30°C et une température intérieure de l'ordre de +20°C pour l'une desdites pompes, et entre une température maximale dudit échangeur de l'ordre de +70°C et une température intérieure de l'ordre de +20°C pour l'autre desdites pompes.

8. Dispositif selon la revendication 6 ou 7, **caractérisé en ce que** lesdites pompes à chaleur magnétocaloriques (13, 23) sont intégrées dans un seul appareil communalisant au moins certaines de leurs fonctions indifférenciées et comportant deux ou plusieurs régénérateurs magnétocaloriques, chacun adapté à une plage de température spécifique, ainsi qu'un dispositif de commutation (16) mécanique ou hydraulique desdits régénérateurs, de sorte que le fluide caloporteur ne circule que dans le ou les régénérateurs adaptés aux conditions opératoires du moment.

## Claims

1. Method for the thermal regulation of at least one rechargeable electrical energy storage battery, in particular a battery for an electrical traction vehicle, comprising at least one electrochemical component, wherein use is made of at least one enclosure (12) in which said electrochemical component of said battery (11) is housed, of at least one magnetocaloric heat pump (13, 23) associated with said enclosure, and of at least one heat exchange member (14) open to the external environment and wherein heat is exchanged between said electrochemical component of said battery (11) and said external environment by means of a circuit (15) for circulation of a heat-transfer fluid coupled between said battery (11), said heat pump (13, 23) and said heat exchanger (14), said method being **characterised in that** the heat pump (13, 23) is supplied solely by the battery in which it is integrated so that said method is autonomous and permanent.

2. Method according to claim 1, **characterised in that** several magnetocaloric heat pumps (13, 23) are used, each of these pumps being operational in a given temperature range, and **in that** at least one of said pumps is connected with said battery and said heat exchange member open to the external environment according to the internal and/or external temperature range of the electrochemical component of said battery.

3. Method according to claim 2, suitable for the thermal regulation of a battery or a group of batteries exposed to high-amplitude climatic variations between winter and summer, **characterised in that** two magnetocaloric heat pumps (13, 23) are used, arranged to function substantially in a temperature gradient of around 50 K, between a minimum temperature of the exchanger open to the external environment of around -30°C and an internal temperature of around +20°C for one of said pumps, and between a maximum temperature of said exchanger of around +70°C and an internal temperature of around +20°C for the other one of said pumps.

4. Method according to claim 2 or 3, **characterised in that** said magnetocaloric heat pumps (13, 23) are integrated a single device (10) making mutual at least some of their undifferentiated functions and **in that** it uses at least two magnetocaloric regenerators, each suited to a specific temperature range, as well as a device (16) for the hydraulic or mechanical switching of regenerators, so that the heat-transfer fluid circulates only in the regenerator or regenerators suited to the operating conditions of the moment.

5. Device (10) for the thermal regulation of at least one rechargeable electrical energy storage battery, in particular a battery for an electrical or hybrid traction vehicle, comprising at least one electrochemical component, for implementing the method of claim 1, comprising at least one enclosure (12) in which said electrochemical component of said battery (11) is housed, at least one magnetocaloric heat pump (13, 23) associated with said enclosure, at least one circuit (15) for circulation of a heat-transfer fluid coupled between said battery and said heat pump and at least one heat exchange member (14) open to the external environment and connected to said heat-transfer fluid circulation circuit for exchanging heat with said external environment, said device being **characterised in that** the heat pump (13, 23) is supplied solely by the battery in which it is integrated.

6. Device according to claim 5, **characterised in that** it comprises several magnetocaloric heat pumps (13, 23), each of these pumps being operational in a given temperature range, and **in that** at least one of said pumps is connected with said battery and said heat exchange member open to the external environment according to the internal and/or external temperature range of the electrochemical component of said battery.

7. Device according to claim 6, suitable for the thermal regulation of a battery or a group of batteries exposed to high-amplitude climatic variations between winter and summer, **characterised in that** two magnetocaloric heat pumps (13, 23) are used, arranged to function substantially in a temperature gradient of around 50 K, between a minimum temperature of the exchanger open to the external environment of around -30°C and an internal temperature of around +20°C for one of said pumps, and between a maximum temperature of said exchanger of around +70°C and an internal temperature of around +20°C for the other one of said pumps.

8. Device according to claim 6 or 7, **characterised in that** said magnetocaloric heat pumps (13, 23) are integrated in a single apparatus making common at least some of their undifferentiated functions and comprising two or more magnetocaloric regenerators, each suited to a specific temperature range, as well as a device (16) for the mechanical or hydraulic switching of said regenerators, so that the heat transfer fluid circulates only in the regenerator or regenerators suited to the operating conditions of the moment.

## Patentansprüche

1. Verfahren zur Wärmeregulation von zumindest einer aufladbaren Batterie zur elektrischen Energiespeicherung, insbesondere von einer Batterie eines Fahrzeuges mit Batterieantrieb, umfassend zumindest eine elektrochemische Komponente, in dem zumindest ein Raum (12) verwendet wird, in dem die elektrochemische Komponente der Batterie (11) untergebracht ist, zumindest eine magnetokalorische Wärmepumpe (13, 23), die mit dem besagten Raum verbunden ist, und zumindest ein Wärmeaustauschorgan (14), das offen zum Außenmilieu ist, und in dem Kalorien zwischen der besagten elektrochemischen Komponente und der besagten Batterie (11) und dem besagten Außenmilieu ausgetauscht werden mit Hilfe eines Kreislaufs (15) für den Umlauf eines Wärmefluids, der zwischen der besagten Batterie (11), der besagten Wärmepumpe (13, 23) und dem besagten Wärmeaustauscher (14) gekoppelt ist, wobei das besagte Verfahren **dadurch gekennzeichnet ist, dass** die Wärmepumpe (13, 23) nur durch die Batterie versorgt wird, in der sie integriert ist, damit das besagte Verfahren autonom und permanent ist.

2. Verfahren nach Anspruch 1, **dadurch gekennzeichnet, dass** mehrere magnetokalorische Wärmepumpen (13, 23) verwendet werden, wobei jede dieser Pumpen in einem bestimmten Temperaturbereich einsatzfähig ist, und dadurch dass zumindest eine der besagten Pumpen mit der besagten Batterie und dem Wärmeaustauschorgan, der offen zum Außenmilieu ist, in Abhängigkeit zum internen und/oder externen Temperaturbereich der elektrochemischen Komponente der besagten Batterie, verbunden ist.

3. Verfahren nach Anspruch 2, geeignet zur Wärmeregulation einer Batterie oder einer Gruppe von Batterien, die Klimaschwankungen mit starken Unterschiedenen zwischen Winter und Sommer ausgesetzt sind, **dadurch gekennzeichnet, dass** zwei magnetokalorische Wärmepumpen (13, 23) verwendet werden, die angeordnet sind, um im Wesentlichen in einem Temperaturgradient von 50 K zwischen einer Mindesttemperatur des Austauschers, der offen zum Außenmilieu ist, von -30°C und einer internen Temperatur von +20°C für eine der besagten Pumpen, und zwischen einer Höchsttemperatur des besagten Austauschers von +70°C und einer internen Temperatur von +20°C für die andere besagte Pumpe zu funktionieren.

4. Verfahren nach Anspruch 2 oder 3, **dadurch gekennzeichnet, dass** die besagten magnetokalorischen Wärmepumpen (13, 23) in einer einzigen Vorrichtung (10) integriert sind, die zumindest einige ihrer undifferenzierten Funktionen mutualisieren, und dass es zumindest zwei magnetokalorische Regeneratoren einsetzt, wobei jeder an einen spezifischen Temperaturbereich angepasst ist, sowie eine Vorrichtung der hydraulischen oder mechanischen Umschaltung (16) der besagten Regeneratoren, so dass das Wärmefluid nur in dem oder den Regeneratoren verkehrt, der oder die an die aktuellen Einsatzbedingungen angepasst ist oder sind.

5. Vorrichtung (10) zur Wärmeregulation von zumindest einer aufladbaren Batterie zur elektrischen Energiespeicherung, insbesondere von einer Batterie eines Fahrzeuges mit Batterieantrieb oder eines Hybridfahrzeuges, umfassend zumindest eine elektrochemische Komponente, für den Einsatz des Verfahrens von Anspruch 1, umfassend zumindest einen Raum (12), in dem die besagte elektrochemische Komponente der besagten Batterie (11) untergebracht ist, zumindest eine magnetokalorische Wärmepumpe (13, 23), die mit dem besagten Raum verbunden ist, zumindest einen Kreislauf (15) für den Umlauf eines Wärmefluids, der zwischen der besagten Batterie und der besagten Wärmepumpe gekoppelt ist, und zumindest ein Wärmeaustauschorgan (14), das offen zum Außenmilieu ist, und das an den besagten Kreislauf für den Umlauf des Wärmefluid angeschlossen ist, um Kalorien mit dem besagten Außenmilieu auszutauschen, wobei die besagte Vorrichtung **dadurch gekennzeichnet ist, dass** die Wärmepumpe (13, 23) nur durch die Batterie versorgt wird, in der sie integriert ist.

6. Vorrichtung nach Anspruch 5, **dadurch gekennzeichnet, dass** sie mehrere magnetokalorische Wärmepumpen (13, 23) umfasst, wobei jede dieser Pumpen in einem bestimmten Temperaturbereich einsatzfähig ist, und dadurch dass zumindest eine der besagten Pumpen mit der besagten Batterie und dem besagten Wärmeaustauschorgan, das offen zum Außenmilieu ist, in Abhängigkeit vom internen und/oder externen Temperaturbereich der elektrochemischen Komponente der besagten Batterie, verbunden wird.

7. Vorrichtung nach Anspruch 6, geeignet zur Wärmeregulation einer Batterie oder einer Gruppe von Batterien, die Klimaschwankungen mit starken Unterschiedenen zwischen Winter und Sommer ausgesetzt sind, **dadurch gekennzeichnet, dass** sie zwei magnetokalorische Wärmepumpen (13, 23) umfasst, die angeordnet sind, um im Wesentlichen in einem Temperaturgradient von 50 K, zwischen einer Mindesttemperatur des Austauschers, der offen zum Außenmilieu ist, von -30°C und einer internen Temperatur von +20°C für eine der besagten Pumpen, und zwischen einer Höchsttemperatur des besagten Austauschers von +70°C und einer internen Temperatur von +20°C für die andere besagte Pumpe zu funktionieren.

8. Vorrichtung nach Anspruch 6 oder 7, **dadurch gekennzeichnet, dass** die besagten magnetokalorischen Wärmepumpen (13, 23) in einem einzigen Gerät integriert sind, das zumindest einige ihrer undifferenzierten Funktionen gemeinsam verwaltet und zwei oder mehrere magnetokalorische Regeneratoren umfasst, wobei jeder an einen spezifischen Temperaturbereich angepasst ist, sowie eine Vorrichtung zur hydraulischen oder mechanischen Umschaltung (16) der besagten Regeneratoren, so dass das Wärmefluid nur in dem oder den Regeneratoren verkehrt, der oder die an die aktuellen Einsatzbedingungen angepasst ist oder sind.
